# EUROPEAN PATENT SPECIFICATION

(11) **EP 2 215 372 B1**
(45) Date of publication and mention of the grant of the patent: **02.01.2013**
(21) Application number: 08853702.2
(22) Date of filing: 24.11.2008
(51) Int. Cl.: F16B 21/02

(54) **A FASTENER ELEMENT ADAPTED TO ATTACH A STRUCTURAL MEMBER TO A SHEET-LIKE SUPPORT MEMBER**
BEFESTIGUNGSELEMENT ZUR ANBRINGUNG EINES STRUKTURELEMENTS AN EINEM BAHNENFÖRMIGEN TRÄGERELEMENT
ELÉMENT DE FIXATION ADAPTÉ POUR ATTACHER UN ÉLÉMENT STRUCTUREL À UN ÉLÉMENT DE SUPPORT ANALOGUE À UNE FEUILLE

(30) Priority: 30.11.2007 DE 102007057792
(43) Date of publication of application: 11.08.2010
(73) Proprietor: ITW Automotive Products GmbH & Co. KG, 58642 Iserlohn (DE)
(72) Inventor: SEIDEL, Stefan, 97255 Gelchsheim (DE)
(74) Representative: Hauck Patent- und Rechtsanwälte
(86) International application number: PCT/IB2008/003211
(87) International publication number: WO 2009/068962

(56) References cited:
- DE-A1-102004 003 714
- DE-U1- 29 804 559
- GB-A- 2 020 731
- US-A- 3 986 780

## Description

The present invention relates to a fastener element, hereafter fastener, used to attach, hereafter affix, a structural member to a sheet-like support member, hereafter a planar support, as defined in claim 1.

A number of fasteners are known, especially those integrally made of plastic, which are inserted into apertures of supports such as sheetmetals, in order to affix structural members. Such fasteners usually comprise a foot portion snapping into the affixation hole retaining them. Head segments of diverse shapes are connected to the foot portion to allow mounting differently shaped structural members to the support. The foot portions employed heretofore subtend a comparatively large height. The known fasteners frequently cannot be used where the support side opposite the head segment leaves only little space because of the foot portion height is too large. Moreover the known foot portions frequently do not allow non-destructive disassembly. Lastly their retention forces are often relatively low.

From GB 2 020 731 A a fastening element for releasably fastening together two plates is known. The fastening element comprises a first non-circular head being joined to a shaft and a second shaft with a second non-circular head. Both shafts are provided with stop surfaces for limiting rotation and suitably shaped holes. In the mounted state two plates are held firmly together between the two heads.

From US 3 986 780 A a fixing member is known comprising two supporting portions coupled to each other by a rigid rod and spaced apart by a distance equal to the thickness of a support having a non-circular receiving orifice and two flat faces. The first portion has an apparent contour equal to that of the receiving orifice and two axes of symmetry. The second portion comprises at least two locking bosses for the fixing member rigidly fixed to an elastic member.
Accordingly it is the objective of the present invention to create a fastener to affix a structural member to a planar support and being manufacturable in simple manner, further comprising a shallow foot portion, offering large retention forces and requiring only low assembly forces.

This problem is solved by the features of claim 1.

The fastener of the present invention comprises an elongated foot which can be mounted in an elongated support aperture subtending a longitudinal axis. This longitudinal axis runs transversely to a vertical fastener axis. Accordingly the fastener of the present invention is inapplicable to circular holes, rather it applies to elongated apertures of various contours.

The fastener foot of the present invention comprises a lower portion subtending a longitudinal axis, said portion being of a shape allowing inserting it into the aperture when, in a first installation stage, the lower portion's longitudinal axis is approximately aligned with the aperture's longitudinal axis. Accordingly lower portion insertion requires a specific alignment with the elongated aperture's longitudinal axis. Said lower portion also comprises an upwardly directed rest surface designed in a manner that this rest surface extends partly beyond the aperture's rim when the fastener is being rotated in a first direction of rotation, by a predetermined angle relative to the first installation position, into a second installation position. Thereby the fastener is prevented from being pulled by means of the lower portion out of said aperture when it is in said second installation position.

The foot of the fastener of the invention also comprises an upper portion connected by a central spacer bar to the lower portion while spaced from the upper rest surface. The upper portion is fitted with a lower rest surface, the peripheral contour of the upper portion being dimensioned in a way that said upper portion at least partly overlaps the aperture in each rotational fastener position. Also a recess which is open both downward and toward the upper rest surface is fitted into the lower portion. Again an upper recess is provided above the lower recess and is aligned with it and situated in the upper recess, and is open toward the lower rest surface. A resilient detent is integrated into the spacer bar and runs in tang-like manner outward from the spacer bar into gaps between the rest surfaces, while being bendable upward into the upper recess when the lower portion is inserted at the opposite support side into the aperture until coming to rest against the lower rest surface. In its relaxed state, the detent is situated substantially in the raised gap between the upper and lower portions, but it shall be deflected upward when impacting the opposite support side and being bent by latter upward into the upper recess. Thereafter the fastener, respectively the foot, may be rotated by a predetermined angle in a first direction of rotation into a second installation position. When in the second installation position, the fastener shall be rotated so far that the detent is released at an opposite rim segment of said aperture and then resumes its relaxed position.

The fastener of the invention is based on the feature that both the aperture in the support and the fastener foot are elongated, as a result of which a relative rotation of foot and aperture entails a gap between the foot and the aperture rim, said aperture receiving the previously bent detent. This feature precludes the fastener from rotating from the second installation position back into the first. In this position moreover the lower portion's upper rest position overlaps at least in part the aperture, and the foot of the fastener of the invention also is precluded from being pulled out of the aperture. Consequently the foot is reliably anchored in the support's aperture. This feature offers the advantage that neither of the upper and lower foot portions need be thick, instead they may be relatively flat and illustratively in one embodiment of the present invention they may be planar or dish-like.

Another embodiment mode of the present invention, prevents the fastener from rotating in the support in the first direction of rotation beyond the second installation position on account of a stop integrated into the spacer bar in front of the stop as seen in the first direction of rotation, said stop resting in blocking manner against the associated aperture rim when the detent is rotated along the first direction of rotation beyond the second installation position. Excessive fastener rotation is prevented thereby.

The present invention offers a number of advantages. As already mentioned, the height "behind" the support may be minimized. The fastener of the invention assures high forces of retention while demanding only low forces of assembly. The manufacturing cost of the fastener of the invention is relatively low. Even assembly is comparatively simple. The fastener of the present invention is applicable to the most diverse installation apertures of the most diverse applications.

Preferably more than one, namely two detents shall be used and are preferably configured approximately diametrically mutually opposite. It is understood that each detent is associated with one lower recess in the lower portion and one upper recess in the upper portion.

When the distance between the lower and upper rest surfaces exceeds the thickness of the support in the zone of the aperture, however, the fastener cannot be removed and playless seating is not attained. Playless seating requires that the distance between the rest surfaces correspond to or be less than the support's thickness. In the latter case the fastener furthermore is clamped also to the support.

In a further embodiment mode of the present invention, the upper recess furthermore is open toward the periphery of the upper portion. In this way, the detent is accessible to a tool gripping it and pulling it out of the aperture to allow back-rotating the fastener from the second into the first installation position. Consequently the fastener can be removed in non-destructive manner.

The present invention offers a further way to non-destructively remove the fastener in that the detent is fitted - on its side pointing oppositely to the first direction of rotation -- with a ramp in such manner that said detent shall be lifted above the support when the fastener is back-rotated in a second direction of rotation from the second installation position in the direction of the first installation position. It is understood this procedure requires applying some force of rotation to rotate the fastener back into the fist installation position.

The words "lower" and "upper" herein assume that the fastener when being installed shall subtend a vertical axis and the said portions shall subtend a horizontal axis while the fastener is bendable horizontally, but clearly the fastener of the present invention also may be installed in another orientation in the support. Accordingly "lower" and "upper" merely denote the mutual configurations of individual surfaces and portions within the fastener and do not prejudge installation position orientation.

The present invention is elucidated below in relation to the appended drawings.
**Fig. 1** is a perspective of a first embodiment mode of a fastener foot of the invention situated above a support,
**Fig. 2** shows the configuration of Fig. 1 with the underside of the support and the foot,
**Fig. 3** is a side view of the installed foot of Fig. 1 in a first installation position,
**Fig. 4** is an enlarged detail in the first installation position,
**Fig. 5** is a view similar to that of Fig. 4 in the second installation position,
**Fig. 6** is a perspective of the foot of Fig. 1 obliquely from above, in the installed state,
**Fig. 7** shows the configuration of Fig. 6 seen from below,
**Fig. 8** is a perspective from below of the foot of Fig. 1,
**Fig. 9** shows the configuration of a second embodiment mode of the foot of a fastener foot of the invention above an elongated fastener aperture in a support,
**Fig. 10** shows a third embodiment mode of a fastener foot fitted with a keyed aperture shape of the support aperture, and
**Fig. 11** is a perspective of a fourth embodiment mode of a fastener foot of the invention above a rectangular aperture in the support.

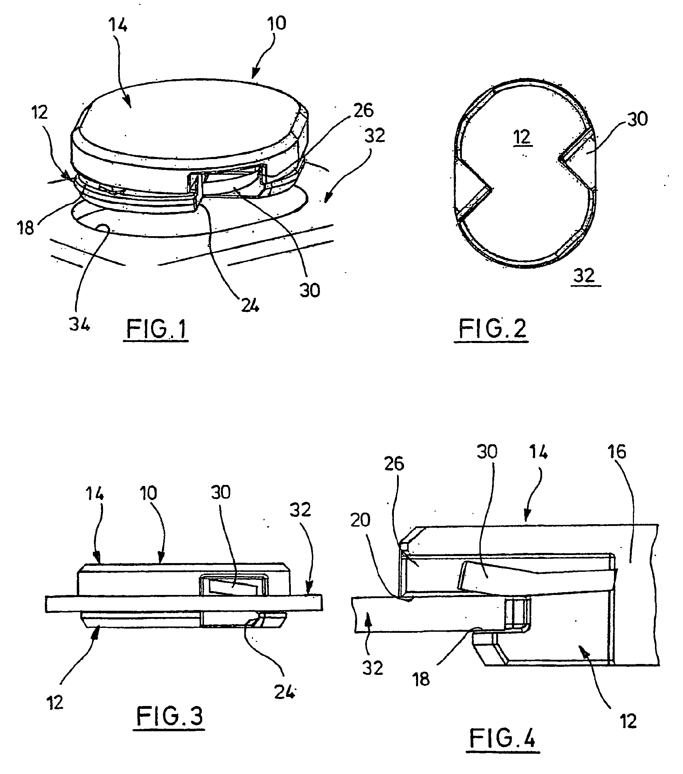

Only a fastener foot is shown in Figs. 1 through 11. The other parts of the fastener may be arbitrary.

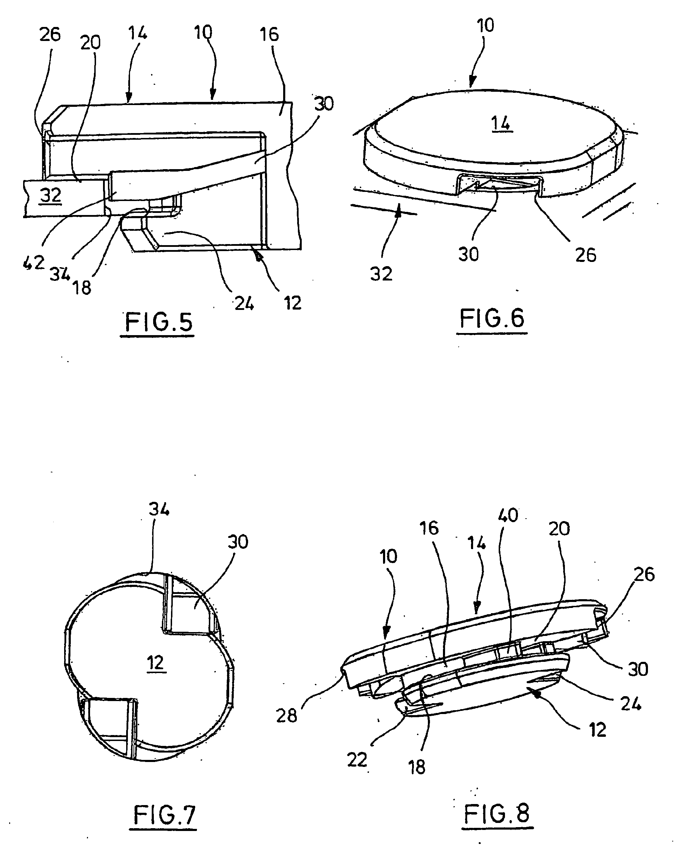

A first embodiment mode of a foot 10 is shown in Figs. 1 through 8. As shown especially clearly in Figs. 1 and 8, said foot comprises a lamellar lower portion 12 and a lamellar upper portion 14. The portions 12, 14 are connected to each other by an approximately central spacer bar 16. The lower portion 12 is fitted with an upward-pointing planar rest surface 18, which -- except for two discontinuities -- runs approximately around the periphery of the lower portion 12. The upper portion 14 is fitted with a lower rest surface 20 which is also planar and runs parallel to the lower rest surface 18 and except for two recesses is annularly situated around the surface of the upper portion 14. The rest surfaces 18, 20 are kept a predetermined distance apart.

The lower portion 12 is fitted with two triform recesses 22, 24 which are shown especially clearly in Fig. 8. These recesses are open outwards to the periphery and to the upper rest surface 18 and also downward. Above the recesses 22, 24, the upper portion 14 is also fitted with recesses shown at 26 and 28. Detents such as the one shown at 30 run between the rest surfaces 18, 20 from the central spacer bar 16 outward, their outward size being slightly larger than the size of the rest surface 18 as indicated particularly clearly in Fig. 4.

Fig. 1 shows a perspective of a support 32. Illustratively said support is made of sheetmetal and comprises an oval aperture 34. The periphery of the lower portion 12 of the foot 10 is complementary to the aperture 34. Said lower portion can be inserted into the aperture 34 when the longitudinal axis of the portion 12 approximately coincides with the longitudinal axis of the aperture 34. When in that condition the foot 10 is pressed into the aperture 34, the detent 30 will be seized by the rim of the aperture 34 respectively the adjacent zone of the support 32 and bent upward as indicated in Figs. 3 and 4. When, in this first installation position, the foot 10 as indicated in Fig. 1 is rotated clockwise, the detent 30 shall migrate on the top side of the support 32. In addition the rim of the aperture 34 moves between the rest surfaces 18, 20 as shown especially clearly in Fig. 4. When the fastener respectively the foot 10 is rotated about a predetermined angle of about 65°, the end of the detent 30 shall be released from the rim of the aperture 34. This state is shown in Figs. 5 and 7. The detent 30 resumes its earlier shape and arrives in the aperture 34. In this manner the foot 10 is prevented from being rotated in the opposite direction and thereby return into the first installation position is precluded. The foot furthermore is prevented from being forced further into the aperture 34 or being retracted out of it, such conditions being circumvented by the rest surfaces 18, 20 enclosing the aperture rim of the support 32. Illustratively the gap between the rest surfaces 18, 20 is equal to the thickness of the support 12 in the region of the aperture 34. Said gap also may be minimally larger or smaller.

A stop is constituted at 40 in Fig. 8 and integrated on the spacer bar 16, being situated at the front side of the detent 30 as seen in the cited direction of rotation. In said rotation of the foot 10, the stop rests against the aperture rim in the event of an attempt to rotate the foot farther than the second installation position after the detents 30 have snapped into the aperture 34. In this manner the stop 40 precludes so-called over-rotation of the foot 10 in the aperture 34.

In order to remove the foot 10 from the second installation position and hence from the support 32, a tool is used to lift the associated detent 30 above the aperture 26 until the foot can be rotated back into the first installation position. It is understood that this requirement is synchronously applicable to the two mutually opposite detents. As a result, when the foot is in the first installation position, it can be lifted out of the aperture 34. However the detents 30 also may be fitted with a ramp face indicated in dashed lines at 42. The ramp faces runs against the aperture rim when the foot is rotated back into the first installation position and allows gradually lifting the detents 30 into the position shown in Fig. 4, as a result of which the foot 10 can be rotated back into the first installation position.

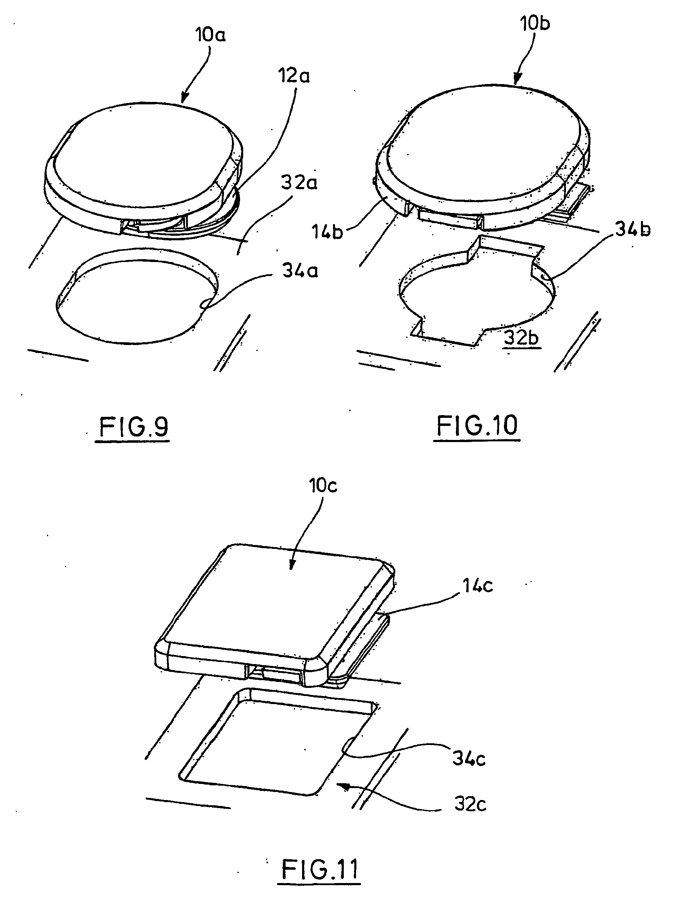

Fig. 9 shows a foot 10a designed in the same manner as described in relation to the foot 10 of Figs. 1 through 8. The sole difference consists of the contour of the lower portion 10a matching the elongated slot 34a in the support 32a.

A keyhole-like aperture 34b in the support 32b matches the lower portion 14b of the foot 10b of Fig. 10. However the design of the foot 10b is the same as that of the foot 10 of Figs. 1 through 8.

In Fig. 11, a support 32c is fitted with a rectangular aperture 34c. The lower portion 14 again matched to the rectangular aperture 34c. However the design of the foot 10c again is the same as that of foot 10 in Figs. 1 through 8.

## Claims

1. A fastener to affix a structural member to a flat support, said fastener comprising an elongated foot which can be affixed in an elongated support aperture subtending a longitudinal axis, said foot exhibiting the following features:
- A lower portion (12) which subtends a longitudinal axis, the elongated peripheral contour of said lower portion allowing inserting it into the aperture (34) when, in a first installation position of the foot (10), the longitudinal axis of said lower portion is approximately aligned with longitudinal axis of the aperture (34), where
- The lower portion (12) is fitted with an upwardly directed rest surface (18) designed in a manner that the upper rest surface partly extends beyond the rim of the aperture (34) when the fastener has been rotated by a predetermined angle in a predetermined direction of rotation into a second installation position,
- An upper portion (14) which is spaced from the upper rest surface (18) by means of a central spacer bar (16) that connects it to the lower portion (12), said upper portion comprising a lower rest surface (20), the peripheral contour of the upper portion (14) being dimensioned in a way that said contour shall at least partly overlap the aperture (34) in each rotational fastener position, and **characterized by** the following features
- At least one lower recess (22, 24) open toward the periphery and toward the upper rest surface (18) of the lower portion (12),
- An upper recess (26) which is situated above the lower recess (22, 24) in the upper portion (14) and which is open toward the lower rest surface (20),
- A resilient detent (30) which is connected to the spacer bar (16) and extends outward from the spacer bar (16) in the region of the recesses in the gap between the upper and the lower rest surfaces (18, 20), and which is bendable upward into the upper recess (26) when the lower portion (12) is inserted into the aperture (34) until touching the lower restsurface (20) at the adjacent side of the support (32) where
- The outward size of the tang of the detent (30) is larger than the outward size of the upper rest surface (18) and where
- The detent (30) moves into a relaxed position into the aperture (34) when - following rotation of the fastener by a predetermined angle from the first installation position along a first direction of rotation into the second installation position - the detent is released from an opposite rim segment of the aperture (34) and the peripheral rim of the aperture (34) is situated at least partly between the upper and lower portions (18, 20).

2. A fastener as claimed in claim 1, **characterized in that** a stop (40) is integrated into the spacer bar (16) behind the detent (30) as seen in the first direction of rotation and rests in blocking manner against the rim of the aperture (34) when the detent (30) is rotated in the first direction of rotation beyond the second fastener installation position.

3. Fastener as claimed in either of claims 1 and 2, **characterized in that** one detent each (30) is configured at mutually opposite longitudinal sides of the fastener between the mutually opposite rest surfaces of the lower and upper portions.

4. Fastener as claimed in one of claims 1 through 3, **characterized in that** the gap between the upper and lower rest surfaces (18, 20) corresponds approximately to the thickness of the support (32) in the zone of the aperture (34).

5. Fastener as claimed in one of claims 1 through 4, **characterized in that** the upper and lower rest surfaces (18, 20) are fitted with planar, mutually spaced and parallel surfaces.

6. Fastener as claimed in one of claims 1 through 5, **characterized in that** the lower and upper rest surfaces (18, 20) are peripherally circular except for the recesses (22, 24, 26).

7. Fastener as claimed in one of claims 1 through 6, **characterized in that** the upper recess(26) also is open toward the periphery of the upper portion (14).

8. Fastener as claimed in one of claims 1 through 7, **characterized in that** the lower and/or upper portions (12, 14) are laminar or dish-like.

9. Fastener as claimed in one of claims 1 through 8, **characterized in that** the detent (30) is fitted on the side opposite the first direction of rotation with a ramp face (42) in a manner that the detent (30) shall be lifted above the support (32) when the fastener is rotated from the second installation position into a second direction of rotation back toward the first installation position.

## Patentansprüche

1. Befestigungselement zur Anbringung eines Bauteils an einem flachen Trägerbauteil, wobei das Befestigungselement einen länglichen Fuß aufweist, der in einem länglichen eine Längsachse aufweisendem Loch des Trägerbauteils anbringbar ist und der Fuß folgende Merkmale enthält:
- einen eine Längsachse aufweisenden unteren Abschnitt (12), dessen längliche Umfangskontur so ausgebildet ist, dass er in das Loch (34) einführbar ist, wenn in einer ersten Einbaulauge des Fußes (10) die Längsachse des unteren Abschnitts (14) annähernd zur Längsachse des Loches (34) ausgerichtet ist, wobei
- der untere Abschnitt (12) eine nach oben gerichtete Anlagefläche (18) aufweist, die so ausgebildet ist, dass sich die obere Anlagefläche teilweise über den Rand des Loches (34) hinaus erstreckt, wenn das Befestigungselement gegenüber der ersten Einbaulage um einen vorgegebenen Winkel in einer vorgegebenen Drehrichtung in eine zweite Einbaulage gedreht wird
- einen oberen Abschnitt (14), der im Abstand zur oberen Anlagefläche (18) über einen mittleren Schaftabschnitt (16) mit dem unteren Abschnitt (12) verbunden ist und eine untere Anlagefläche (20) aufweist, wobei die Umfangskontur des oberen Abschnitts (14) so bemessen ist, dass er in jeder Drehlage des Befestigungselements das Loch (34) zumindest teilweise überdeckt, und **gekennzeichnet durch** die folgenden Merkmale
- mindestens eine nach unten, zum Umfang und zur oberen Anlagefläche (18) des unteren Abschnitts (12) hin geöffnete untere Ausnehmung (22, 24)
- eine obere Ausnehmung (26) oberhalb der unteren Ausnehmung (22, 24) in dem oberen Abschnitt (14), die zur unteren Anlagefläche (20) hin geöffnet ist
- ein mit dem Schaftabschnitt (16) verbundenes federndes Rastelement (30), das sich von dem Schaftabschnitt (16) nach außen im Bereich der Ausnehmungen in dem Zwischenraum zwischen oberer und unterer Anlagefläche (18, 20) hinein erstreckt und nach oben in die obere Ausnehmung (26) hinein biegbar ist, wenn der untere Abschnitt (12) bis zur Anlage der unteren Anlagefläche (20) an der zugekehrten Seite des Trägerbauteils (32) in das Loch (34) eingeführt wird, wobei
- die äußere Erstreckung der Zunge des Rastelements (30) größer als die äußere Erstreckung der oberen Anlagefläche (18) und wobei
- sich das Rastelement (30) in eine entspannte Lage in das Loch (34) hinein bewegt, wenn nach einer Drehung des Befestigungselements um einen vorgegebenen Winkel in der ersten Drehrichtung in die zweite Einbaulage das Rastelement von einem zugekehrten Kantenabschnitt des Loches (34) frei kommt und die umlaufende Kante des Loches (34) zumindest teilweise zwischen oberer und unterer Anlagefläche (18, 20) liegt.

2. Befestigungselement nach Anspruch 1, **dadurch gekennzeichnet, dass** am Schaftabschnitt (16) in der ersten Drehrichtung gesehen hinter dem Rastelement (30) ein Anschlagabschnitt (40) angeformt ist, er sich blockierend gegen die Kante des Loches (34) anlegt, wenn das Rastelement (30) über die zweite Einbaulage des Befestigungselements hinaus in der ersten Drehrichtung gedreht wird.

3. Befestigungselement nach Anspruch 1 oder 2, **dadurch gekennzeichnet, dass** auf gegenüberliegenden Längsseiten des Befestigungselements jeweils ein Rastelement (30) zwischen den einander gegenüberliegenden Anlageflächen von unterem und oberem Abschnitt angeordnet ist.

4. Befestigungselement nach einem der Ansprüche 1 bis 3, **dadurch gekennzeichnet, dass** der Abstand von oberer und unterer Anlagefläche (18, 20) annähernd der Dicke des Trägerbauteils (32) im Bereich des Loches (34) entspricht.

5. Befestigungselement nach einem der Ansprüche 1 bis 4, **dadurch gekennzeichnet, dass** obere und untere Anlagefläche (18, 20) parallel beanstandete plane Flächen aufweisen.

6. Befestigungselement nach einem der Ansprüche 1 bis 5, **dadurch gekennzeichnet, dass** die untere und obere Anlagefläche (18, 20) mit Ausnahme der Ausnehmungen (22, 24, 26) ringförmig rumlaufen.

7. Befestigungselement nach einem der Ansprüche 1 bis 6, **dadurch gekennzeichnet, dass** auch die obere Ausnehmung (26) zum Umfang des oberen Abschnitts (14) hin offen ist.

8. Befestigungselement nach einem der Ansprüche 1 bis 7, **dadurch gekennzeichnet, dass** untere und/oder obere Abschnitte (12, 14) teller- oder scheibenförmig ausgebildet sind.

9. Befestigungselement nach einem der Ansprüche 1 bis 8, **dadurch gekennzeichnet, dass** das Rastelement (30) auf der Seite, die entgegengesetzt der ersten Drehrichtung zeigt, eine Rampenfläche (42) aufweist derart, dass das Rastelement (30) nach oben oberhalb des Trägerbauteils (32) angehoben wird, wenn das Befestigungselement aus der zweiten Einbaulage in einer zweiten Drehrichtung zurück in die Richtung der ersten Einbaulage gedreht wird.

## Revendications

1. Élément de fixation pour attacher un organe structural à un support plat, ledit élément de fixation comprenant un pied allongé qui peut être attaché dans une ouverture allongée du support sous-tendant un axe longitudinal, ledit pied présentant les éléments suivants :
- une partie inférieure (12) qui sous-tend un axe longitudinal, le contour périphérique allongé de ladite partie inférieure permettant son insertion dans l'ouverture (34) lorsque, dans une première position d'installation du pied (10), l'axe longitudinal de ladite partie inférieure est approximativement aligné avec l'axe longitudinal de l'ouverture (34),
- la partie inférieure (12) étant pourvue d'une surface d'appui (18) dirigée vers le haut conçue de manière à ce que la surface d'appui supérieure s'étende partiellement au-delà du bord de l'ouverture (34) lorsque l'élément de fixation a été tourné d'un angle prédéterminé dans un sens prédéterminé de rotation jusqu'à atteindre une deuxième position d'installation,
- une partie supérieure (14) qui est espacée de la surface d'appui supérieure (18) au moyen d'une barre d'espacement centrale (16) qui la relie à la partie inférieure (12), ladite partie supérieure comprenant une surface d'appui inférieure (20), le contour périphérique de la partie supérieure (14) étant dimensionné d'une manière telle que ledit contour chevauche au moins partiellement l'ouverture (34) dans chaque position en rotation de l'élément de fixation, et **caractérisé par** les éléments suivants :
- au moins un évidement inférieur (22, 24) ouvert en direction de la périphérie et en direction de la surface d'appui supérieure (18) de la partie inférieure (12),
- un évidement supérieur (26) qui est situé au-dessus de l'évidement inférieur (22, 24) dans la partie supérieure (14) et qui est ouvert en direction de la surface d'appui inférieure (20),
- un élément d'encliquetage élastique (30) qui est relié à la barre d'espacement (16), qui s'étend vers l'extérieur à partir de la barre d'espacement (16) dans la région des évidements dans l'espace entre les surfaces d'appui supérieure et inférieure (18, 20), et qui peut être courbé vers le haut dans l'évidement supérieur (26) lorsque la partie inférieure (12) est insérée dans l'ouverture (34), jusqu'à venir en contact avec la surface d'appui inférieure (20) au niveau du côté adjacent du support (32),
- la dimension externe du tenon de l'élément d'encliquetage (30) étant supérieure à la dimension externe de la surface d'appui supérieure (18), et
- l'élément d'encliquetage (30) se déplaçant jusqu'à une position relâchée dans l'ouverture (34) lorsque, suite à la rotation de l'élément de fixation sur un angle prédéterminé à partir de la première position d'installation dans un premier sens de rotation jusqu'à atteindre la deuxième position d'installation, l'élément d'encliquetage est libéré d'un segment de bord opposé de l'ouverture (34) et le bord périphérique de l'ouverture (34) est situé au moins partiellement entre les parties supérieure et inférieure (18, 20).

2. Élément de fixation selon la revendication 1, **caractérisé en ce qu'**une butée (40) est intégrée à la barre d'espacement (16) derrière l'élément d'encliquetage (30) tel que vu dans le premier sens de rotation, et repose d'une manière bloquante contre le bord de l'ouverture (34) lorsque l'élément d'encliquetage (30) est tourné dans le premier sens de rotation au-delà de la deuxième position d'installation de l'élément de fixation.

3. Élément de fixation selon la revendication 1 ou 2, **caractérisé en ce qu'**un élément d'encliquetage (30) respectif est configuré sur des côtés longitudinaux opposés l'un à l'autre de l'élément de fixation entre les surface d'appui opposées l'une à l'autre des parties inférieure et supérieure.

4. Élément de fixation selon l'une quelconque des revendications 1 à 3, **caractérisé en ce que** l'espace entre les surfaces d'appui supérieure et inférieure (18, 20) correspond approximativement à l'épaisseur du support (32) dans la zone de l'ouverture (34).

5. Élément de fixation selon l'une quelconque des revendications 1 à 4, **caractérisé en ce que** les surfaces d'appui supérieure et inférieure (18, 20) sont pourvues de surfaces planes, espacées l'une de l'autre et parallèles.

6. Élément de fixation selon l'une quelconque des revendications 1 à 5, **caractérisé en ce que** les surfaces d'appui inférieure et supérieure (18, 20) sont périphériquement circulaires, mis à part les évidements (22, 24, 26).

7. Élément de fixation selon l'une quelconque des revendications 1 à 6, **caractérisé en ce que** l'évidement supérieur (26) est également ouvert en direction de la périphérie de la partie supérieure (14).

8. Élément de fixation selon l'une quelconque des revendications 1 à 7, **caractérisé en ce que** les parties inférieure et/ou supérieure (12, 14) sont lamellaires ou en forme de cuvette.

9. Élément de fixation selon l'une quelconque des revendications 1 à 8, **caractérisé en ce que** l'élément d'encliquetage (30) est pourvu, sur le côté opposé au premier sens de rotation, d'une face de rampe (42), d'une manière telle que l'élément d'encliquetage (30) soit soulevé au-dessus du support (32) lorsque l'on fait revenir l'élément de fixation en direction de la première position d'installation en le faisant tourner à partir de la deuxième position d'installation dans un deuxième sens de rotation.
